# EUROPÄISCHE PATENTSCHRIFT

(11) **EP 0 500 490 B1**
(45) Veröffentlichungstag und Bekanntmachung des Hinweises auf die Patenterteilung: **24.01.1996**
(21) Anmeldenummer: 92810068.4
(22) Anmeldetag: 30.01.1992
(51) Int. Cl.: G01B 11/02

(54) **Verfahren und Vorrichtung zur Messung einer Dimension eines Körpers und Anwendung dieses Verfahrens**
Procedure and device to measure a dimension of an object and application of the procedure
Procédé et dispositif pour la mesure d'une dimension d'un objet et application de ce procédé

(30) Priorität: 13.02.1991 CH 445/91
(43) Veröffentlichungstag der Anmeldung: 26.08.1992
(73) Patentinhaber: SAMRO AG, CH-3400 Burgdorf (CH)
(72) Erfinder: Zwahlen, Hermann, CH-3266 Wiler (CH)
(74) Vertreter: AMMANN PATENTANWAELTE AG BERN

(56) Entgegenhaltungen:
- US-A- 4 413 180
- US-A- 4 929 843
- SENSORS AND ACTUATORS, Bd. 17, Nr. 1-2, 3. Mai 1989, Lausanne, CH, Seiten 255-258; M.STUIVINGA ET AL.: "Range-finding camera based on a position-sensitive device array"
- APPLIED OPTICS, Bd. 21, Nr. 24, Dezember 1982, New York, US, Seiten 4481-4488; H. E. CLINE ET AL.: "Computer-aided surface reconstruction of interference contours"

## Beschreibung

Die vorliegende Erfindung betrifft ein Verfahren zur Messung einer Dimension eines Körpers, wobei der Körper auf einen Messsensor abgebildet und die Dimension elektrooptisch erfasst wird. Bekannte Messverfahren sind auf die Erfassung von höchstens zwei Dimensionen beschränkt, d.h. der Messsensor kann höchstens die zweidimensionale Abbildung des Körpers auswerten. In vielen Fällen ist es jedoch erwünscht, drei Dimensionen des Körpers zu erfassen, um seine Grösse in drei Dimensionen bzw. sein Volumen und Gewicht zu erfassen. Eine solche Erfassung der wirklichen Grösse ist beispielsweise bei Sortiervorgängen erwünscht, insbesondere beim Sortieren von Früchten und Erdfrüchten, speziell Kartoffeln. Das bisher übliche Sortierverfahren, bei welchem Kartoffeln nach ihrer Grösse unterschieden werden, indem sie durch quadratische Oeffnungen abgestufter Grösse durchfallen, kann insofern nicht befriedigen, als besonders schlanke Kartoffeln einer Sortierung zugeordnet werden, obschon sie unter Umständen das doppelte Volumen von kugeligen Kartoffeln gleicher Sortierung aufweisen. Die Erfassung von drei Dimensionen von Körpern war jedoch bisher aufwendig und in bestimmten Fällen praktisch selbst bei höherem Aufwand nicht möglich.

Ein Verfahren zur Bestimmung der Höhe eines Körpers ist aus der US-A-4,929,843 bekannt: Ein Lichtstrahl wird von einem beweglichen Spiegel so abgelenkt, dass er über den Körper hinwegstreicht, in etwa wie ein Suchscheinwerfer. Es ergibt sich damit eine Lichtlinie über den Körper hinweg. Der Körper wird von einer Kamera aus einer Richtung beobachtet, die von derjenigen verschieden ist, mit der der Lichtstrahl auf den Körper auftrifft. Die von der Kamera erfasste Lichtlinie ist daher in Abhängigkeit von der jeweiligen Höhe des Körpers verschoben, woraus sich eine Höhenlinie über den Körper ermitteln lässt.

Ein anderes Verfahren gemäss US-A-4,413,180 erzeugt eine Lichtlinie in Form eines Kreises oder eines Kreisausschnitts. Hierzu wird ein zylinderförmiger Spiegel mit einem hin und her wandernden Lichtstrahl schräg zur Zylinderachse beleuchtet. Alternativ wird ein ebener, schräg an einer Drehvorrichtung angebrachter Spiegel längs der Drehachse beleuchtet, und der vom Spiegel abgelenkte Lichtstrahl wird nochmals von der Innenseite eines zylindrischen, um den Drehspiegel herum angeordneten Spiegels reflektiert. In beiden Fällen folgt der Lichtstrahl einem angenäherten Kegelmantel, dessen Schnitt mit der Beobachtungsfläche die genannte Kreisline bzw. den Kreislinienauschnitt ergibt. Ueberstreicht der Lichtstrahl eine Erhebung, z. B. einen Körper, so wird die Kreislinie für den Beobachtungssensor verzerrt, sofern seine Beobachtungsrichtung nicht mit der Richtung des Lichtstrahls übereinstimmt. Aus der Verzerrung kann die jeweilige Höhe bestimmt werden.

Beide Verfahren zeigen den Nachteil, dass eine zweidimensional arbeitende Kamera bzw. ein solcher Messensor benötigt wird. Entsprechend hoch ist der Aufwand der Auswertung der von dem Sensor aufgenommenen Bilder. Ausserdem wird der Sensor nur wenig ausgenützt, da der bei weitem überwiegende Teil der sensitiven Flächen nicht genützt wird.

Eine Aufgabe der vorliegenden Erfindung besteht nun darin, ein Verfahren anzugeben, bei dem der Aufwand seitens des Messensors verringert wird.

Die gestellte Aufgabe wird gemäss dem Kennzeichen der unabhängigen Ansprüche 1 und 2 gelöst. Die weiteren Ansprüche definieren bevorzugt Ausbildungen, Vorrichtungen zur Ausführung und Anwendungen des Verfahrens.

Die Abmessungen quer zur Abbildungsrichtung können in an sich bekannter Weise mit ein und demselben Sensor erfasst und durch die zugeordnete Elektronik ausgewertet werden.

Die Erfindung betrifft auch eine Anwendung des Verfahrens gemäss Anspruch 10. Die Erfindung betrifft schliesslich auch eine Vorrichtung zur Durchführung des Verfahrens gemäss Anspruch 14.

Die Erfindung wird nun anhand der Zeichnung näher erläutert.

Fig. 1 ist eine schematische Darstellung eines Ausführungsbeispiels der erfindungsgemässen Vorrichtung,
Fig. 2 ist eine schematische Darstellung zur Erläuterung des Messprinzips,
Fig. 3 zeigt ein Beispiel eines optischen Musters,
Fig. 4 zeigt einige Beispiele von Messignalen und
Fig. 5 zeigt ein zweites Beispiel eines optischen Musters.

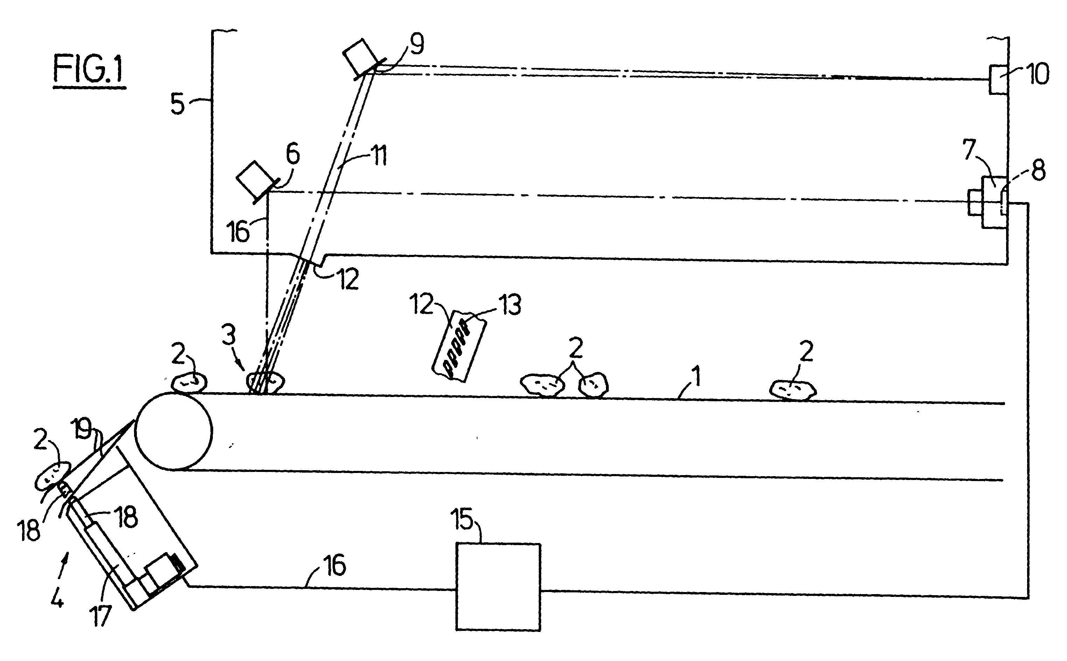

Fig. 1 zeigt schematisch eine Vorrichtung zum Sortieren von Kartoffeln. Auf einem Förderband 1 werden Kartoffeln 2 von rechts nach links durch eine Messzone 3 und über das eine Ende des Förderbandes hinaus auf eine Auswerfvorrichtung 4 gefördert. Ueber dem Förderband 1 befindet sich ein Gehäuse 5 verhältnismässig grosser Länge. Ueber der Messzone 3 befindet sich im Gehäuse 5 ein erster Spiegel 6, über welchen die Messzone auf dem Förderband in eine Kamera 7 abgebildet wird. In der Kamera 7 erstreckt sich in horizontaler Richtung eine Photodiodenreihe 8, welche als optoelektrischer Sensor wirkt. Die Lichtwerte auf den Photodioden können in an sich bekannter Weise zyklich abgetastet werden, womit je eine Linie der abgebildeten Messzone erfasst wird und ausgewertet bzw. zur Auswertung abgespeichert werden kann. Im Gehäuse befindet sich ein zweiter Spiegel 9, über welchen aus einer Lichtquelle 10 ein gerichteter Lichtstrahl 11 in die Messzone 3 geworfen wird. Er tritt dabei durch eine Maske 12 durch, die mit schlitzförmigen Oeffnungen 13 versehen ist. In Fig. 1 ist nur ein kurzer Ausschnitt aus der langgestreckten Maske angedeutet. Sie weist tatsächlich eine Länge auf, welche etwa der Breite des Förderbandes 1 entspricht, derart, dass in der Messzone 3 im ganzen Bereich des Förderbandes, in welchem Kartoffeln angefördert werden können, ein Muster von beleuchteten Streifen erscheint.

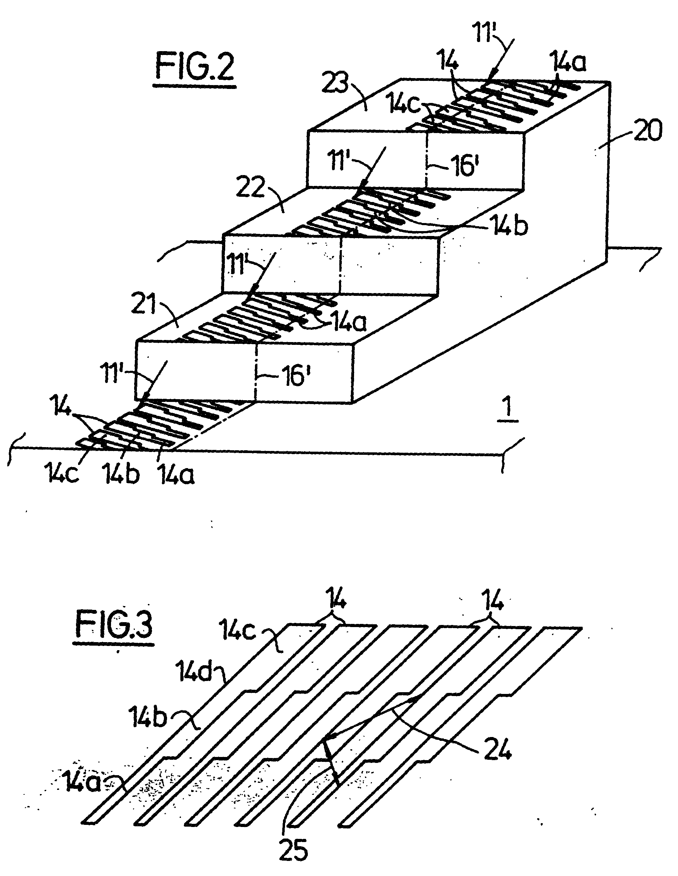

Ein Ausschnitt aus diesem Muster ist in Fig. 3 genauer dargestellt. Jede Oeffnung 13 der Maske 12 bzw. jeder Lichtstreifen 14 auf dem Förderband bzw. auf einer in der Messzone befindlichen Kartoffel 2 ist in Längsrichtung in drei Abschnitte 14a, 14b und 14c gleicher Länge aber zunehmender Breite abgestuft. Im übrigen sind die geraden Vorderkanten 14d der Streifen 14 gegenüber der Längsrichtung des Streifenmusters bzw. der Querrichtung des Förderbandes 1 um 45° geneigt. Es kann aber auch eine andere Neigung gewählt werden. Die Achse bzw. Einfallsrichtung des Lichtstrahls 11 ist gegenüber der Abbildungsrichtung, die in Fig. 1 durch die optische Achse 16 angedeutet ist und rechtwinklig auf dem Förderband steht, um einen gewissen Winkel von beispielsweise 20° bis 30° geneigt. Das in der Messzone auf das Förderband geworfene Muster von Lichtstreifen, die in der Messzone befindlichen Kartoffeln und das auf den Kartoffeln erscheinende Muster von Lichtstreifen werden in die Kamera 7 auf den Sensor 8 abgebildet. Dank des relativ langen optischen Weges zwischen der Messzone auf dem Förderband und der Kamera 7 kann die ganze Breite des Förderbandes bzw. der Messzone 3 auf den Sensor 8 abgebildet werden.

Fig.- 1 zeigt schematisch die Verbindung zwischen dem Sensor 8 und der Elektronik 15 der Vorrichtung. Ausgänge 16 dieser Elektronik sind mit der Auswerfvorrichtung 4 verbunden und wirken dort auf Ventile, welche Druckluft zu Auswerfzylindern 17 steuern, deren Kolbenstangen 18 auf je einen beweglich aufgehängten Finger 19 wirken. Die Auswerfvorrichtung 4, deren Länge etwa der Breite des Förderbandes entspricht, weist eine ganze Reihe von Auswerffingern 19 auf. Gemäss Fig. 1 ist einer dieser Auswerffinger durch die zugeordnete Kolbenstange 18 soeben angehoben worden, um eine vom Förderband über den Finger herabgleitende Kartoffel 2 auszuwerfen.

Wie bereits erwähnt, gestattet die in Fig. 1 dargestellte Vorrichtung eine Erfassung von drei Dimensionen und damit der wirklichen Form und Grösse der Kartoffeln. Die in der Kamera 7 abgebildeten Stellen der Kartoffeln gestatten die Erfassung der Umrisse in der Vertikalprojektion. Die Höhe oder Dicke der Kartoffeln kann mit Hilfe des beschriebenen Musters von Lichtstreifen erfasst werden. Anhand der Fig. 2 ist das Prinzip der Höhenerfassung an einem sehr einfachen Körper 20 erläutert. Infolge des geneigten Einfalls des Beleuchtungsstrahls 11 ist das Streifenmuster von oben gesehen umso mehr in Fig. 1 bzw. Fig. 2 nach rechts verschoben, je höher die Fläche liegt, auf die das Streifenmuster fällt. Auf dem Förderband 1, d.h. bei der Höhe 0, liegen die Streifen so weit links, dass sie ganz ausserhalb der durch die gestrichelte Linie 16' angedeuteten Beobachtungsebene liegen. Diese Situation entspricht einem Niveau 0. Bei einem nächst höheren Niveau 21 liegen die Lichtstreifen 14 weiter rechts und ihre schmalen Abschnitte 14a befinden sich im Bereiche der Beobachtungsebene 16'. In Fig. 2 ist durch Pfeile 11' die Einfallsrichtung des Lichtstrahls 11 angedeutet, welche für die Querverschiebung des Streifenmusters verantwortlich ist. Auf dem nächst höheren Niveau 22 des Körpers 20 erscheinen die Streifen 14 noch weiter nach rechts verschoben, so dass sich nun ihre mittleren Abschnitte 14b im Bereiche der Beobachtungsebene 16' befinden. Auf dem höchsten Niveau 23 erscheinen die Streifen 14 noch weiter nach rechts verschoben, so dass sich nun ihre breitesten Abschnitte 14c im Bereiche der Beobachtungsebene 16' befinden. Aus der Lage der Lichtstreifen 14 bzw. deren Verschiebung gegenüber der Ausgangslage auf dem Förderband 1, lässt sich auf die Höhe bestimmter Stellen eines Körpers schliessen, wobei verschiedene Möglichkeiten bestehen, mittels eines Rechners das Ausmass der Verschiebung und damit die Höhe einer bestimmten Stelle zu erfassen.

Was nun die genaue Erfassung der Höhe betrifft, zeigt die Fig. 3, dass sich die Lichtstreifen 14 in Längsrichtung des Streifenmusters überschneiden. Beim Abtasten der Helligkeitswerte mittels des Sensors 8 quer zum Förderband 1 in der Beobachtungsebene 16, 16', wird die periodische Folge von Licht und Schatten des Strichmusters erfasst. Wenn nun aber gemäss Fig. 2 das Strichmuster an der sichtbaren Oberseite einer Kartoffel gegenüber dem Strichmuster auf dem Förderband seitlich verschoben ist, dann ist auch das erwähnte periodische Signal um einen bestimmten dieser Höhe entsprechenden Betrag phasenverschoben, und wie Fig. 3 zeigt, kann diese Phasenverschiebung mehrere Perioden betragen. Ueber die Breite der Abschnitte 14a, 14b und 14c der Lichtstreifen 14 wird die Verschiebung in ganzen Perioden ermittelt und über die Lage der Vorderkante 14d die Phasenverschiebung innerhalb einer Periode. Ob im Bereiche der schmalen Abschnitte 14a, der mittleren Abschnitte 14b oder der breiten Abschnitte 14c abgetastet wird, lässt sich ohne weiteres ermitteln, indem entweder die Breite des abgetasteten Streifens oder das Taktverhältnis zwischen Licht und Schatten ermittelt wird. In dieser Weise lässt sich schon eine grobe Messung, im Ausführungsbeispiel in drei Bereichen, oder in einer grösseren oder kleineren Zahl abgestufter Bereiche vornehmen. Innerhalb der Bereiche lässt sich dann noch die genaue Phase bzw. der genaue Zeitpunkt des Eintritts in die beleuchtete Zone während der Abtastung ermitteln und daraus mit dem durch den Sensor gegebenen Auflösungsvermögen die genaue Höhe des Körpers ermitteln. Die genaue Auflösung erfolgt hierbei beispielsweise in je acht Abstufungen (2³), und man könnte daher auch davon sprechen, dass der Messbereich in "Oktaven" eingeteilt ist, welche durch die Streifenabschnitte 14a, 14b und 14c bestimmt sind und innerhalb welcher nochmals acht Werte erfasst werden können.

Ebenso ist es möglich, dass sich die schmalen Enden 14a der Streifen 14 bei der Höhe 0 schon im Bereich der Beobachtungsebene 16' befinden, wenn es darum geht, auch sehr geringe Höhen schon sicher und genau zu erfassen.

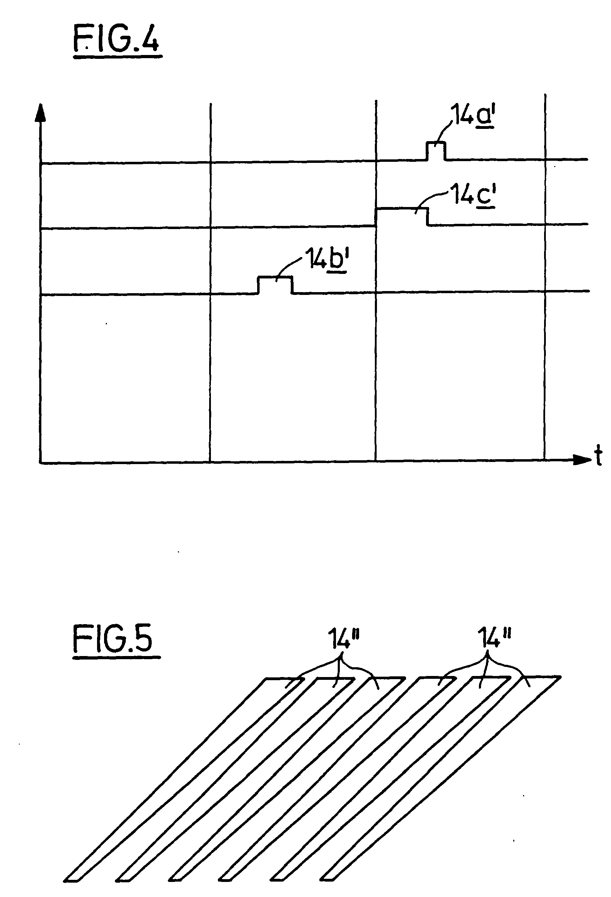

Fig. 4 zeigt ein Beispiel, wie bestimmte Messignale auftreten könnten. Wird im Bereiche eines schmalen Streifenteils 14a abgetastet, tritt ein Impuls 14a' auf, dessen Dauer einer Einheit entspricht. Die Vorderflanke dieses Impulses bezeichnet die genaue Lage des Streifens. Aus der Impulsdauer und dem genauen Zeitpunkt des Impulsbeginns kann auf die Lage des Streifenmusters bzw. auf die Höhe der erfassten Stelle eines Körpers geschlossen werden. Ein weiterer Impuls 14c' hat eine Dauer von drei Einheiten, entspricht also einer Abtastung im Abschnitt 14c des Streifenmusters, und wiederum lässt der Zeitpunkt bzw. die Phase des Impulsanstiegs auf die genaue Lage des Strichmusters bzw. die Höhe der abgetasteten Stelle schliessen. Ein weiterer Impuls 14b' weist eine Dauer von zwei Einheiten auf, entspricht also einem Mittelabschnitt 14b des Streifenmusters.

Die Abtastung der Helligkeitswerte in der Diodenreihe 8 bzw. längs der Messzone 3 auf dem Förderband 1 erfolgt mit hoher Frequenz, so dass beispielsweise in Abständen in der Grössenordnung von 1 mm alle in der Messzone befindlichen Kartoffeln abgetastet werden. Alle dabei erfassten Werte werden abgespeichert und sodann zur Auswertung herangezogen, also zur Bestimmung der Form jeder Kartoffel in der Draufsicht und der Höhe jedes abgetasteten Punktes der Kartoffel. Die grösste erfasste Höhe kann sodann herausgegriffen und für die Grössenklassierung der Kartoffei herangezogen werden. Es ist jedoch auch möglich, mittels des Mikroprozessors weitergehende Berechnungen anzustellen und das Volumen und insbesondere den Schwerpunkt der Kartoffel zu ermitteln. Die Ermittlung des ungefähren Schwerpunktes (die Unterseite der Kartoffel kann nicht erfasst werden) ist von Bedeutung für die Bestimmung des genauen Auswerfzeitpunktes durch die Auswerfvorrichtung 4. Je nach der Klassifizierung jeder Kartoffel, erfolgt ein stärkerer oder schwächerer Auswerfimpuls oder kein Auswerfimpuls, so dass die Kartoffeln an verschiedene Stellen gefördert und damit sortiert werden. Der Mikroprozessor bestimmt hierbei den Zeitpunkt und die Intensität der Auswerfbewegung sowie selbstverständlich den oder die Auswerffinger 19, die zu betätigen sind. Es zeigt sich, dass die ordnungsgemässe Erfassung und Abspeicherung je einer bestimmten Kartoffel zugeordneter Werte keine besonderen Probleme bietet, selbst wenn sich in der Messzone 3 gleichzeitg mehrere Kartoffeln befinden. Eine gewisse Schwierigkeit könnte dann entstehen, wenn zwei Kartoffeln in der Messzone 3 direkt aneinander liegen. In diesem Fall könnten zwei Kartoffeln als eine erfasst werden. Dieser Schwierigkeit kann dank der Neigung der Streifen 14 begegnet werden. Es ist ersichtlich, dass bei der Querverschiebung des Streifenmusters die oben erwähnte, nicht unerhebliche Phasenverschiebung des periodischen Abtastsiqnals erfolgt, und d.h., dass während der Verschiebung bzw. während des Anstiegs auf grössere Höhe auch eine Frequenzänderung erfolgt, und zwar ein Frequenzanstieg bei ansteigenden Flanken eines Körpers und ein Frequenzrückgang bei absteigenden Flanken eines Körpers. In Fig. 3 ist durch Pfeile 24 und 25 angedeutet, dass bei Verschiebung des Musters nach unten, d.h. bei zunehmender Höhe, der zeitliche Abstand zwischen dem Abtasten der vorderen Grenzen der Streifen grösser ist (Pfeil 24) als bei einer gegenteiligen Verschiebung auf einer absteigenden Flanke des erfassten Körpers. Es ist also möglich, mit diesem Hilfsmittel Wert und Sinn der Neigung einer Körperflanke zu bestimmen. Es ist dann auch möglich, beispielsweise beim Abtasten von Kartoffeln, nur Höhenwerte zu erfassen, die auf flachen Stellen auftreten, wo also die Aenderung der sich aus dem Abtasten der Streifen ergebenden Frequenz gering oder 0 ist. Springt nun diese Frequenz beim Abtasten aneinanderliegenden Kartoffeln unvermittelt von einem herabgesetzten auf einen erhöhten Wert, dann kann daraus geschlossen werden, dass es sich um zwei aneinanderliegende Kartoffeln handelt, und die Messignale können entsprechend eingespeichert und verarbeitet werden.

Fig. 5 zeigt eine Ausführungsvariante der Maske 12 bzw. des Streifenmusters. Die Streifen 14" weisen in diesem Falle nicht mehr abgestufte sondern eine kontinuierlich sich ändernde Breite auf. Aus der Streifenbreite bzw. dem Taktverhältnis zwischen Licht und Schatten an der abgetasteten Stelle könnte in diesem Falle direkt auf die Höhe geschlossen werden. Es kann aber auch in diesem Falle von Vorteil sein, zunächst eine grobe Unterteilung in Phasenverschiebungen um ganze Perioden und innerhalb derselben eine Feinunterteilung vorzunehmen, wobei die erfasste Strichbreite oder das erfasste Taktverhältnis zwischen Licht und Schatten die Phasenverschiebung um ganze Perioden bzw. die "Oktave" bestimmt, während die Feinunterteilung durch den Zeitpunkt des Eintritts in einen Streifen bei der Abtastung erfolgt.

Im Falle des Streifenmusters gemäss Fig. 5 kann auf die Neigung der Streifen verzichtet werden, wenn keine Erfassung von Frequenzänderungen bzw. von Flankenneigungen des Körpers und/oder kein hohes Auflösungsvermögen erforderlich ist.

Während die Erfindung oben anhand einer Sortiervorrichtung für Kartoffeln erläutert wurde, können selbstverständlich beliebige Körper in entsprechender Weise geprüft werden, wobei diese Körper auf einem Förderband unter der Messvorrichtung durchlaufen können oder jeweils in einer bestimmten Position gehalten sind.

Es hat sich als vorteilhaft erwiesen, in der Messzone nicht nur die oben beschriebene Streifenbeleuchtung sondern zusätzlich eine konstante Grundbeleuchtung vorzusehen. Damit wird vermieden, dass Konturen von Kartoffeln, die gerade im vollen Schatten des Streifenmusters liegen, ungenau erfasst werden.

Die beschriebene Ausführung mit unbeweglichen optischen Elementen der Messvorrichtung ist besonders einfach und zuverlässig. Es wäre jedoch auch möglich, die Abbildung der Messzone periodisch mittels eines rotierenden oder oszillierenden Spiegels über einen geeigneten Wandler, z. B. eine Photodiode, zu führen und die Signale dieses Wandlers entsprechend auszuwerten.

## Patentansprüche

1. Verfahren zur Messung der Ausdehnung eines Körpers (2) in einer Dimension, wobei der Körper (2) auf einen Messsensor (8) abgebildet und die besagte Ausdehnung elektrooptisch erfasst wird, die Abbildungsrichtung der zu messenden Ausdehnung entspricht und der Körper (2) in einer zur Abbildungsrichtung geneigten Richtung mit einem optischen Muster beleuchtet und vom Messsensor in einer Abtastrichtung abgetastet wird, dadurch gekennzeichnet, dass das Muster ein Streifenmuster ist, dessen Streifen (14) zur Abtastrichtung des Sensors (8) geneigt sind, wobei aus der Lage der Streifen auf dem Körper (2) in der Abbildung auf den Messsensor (8) in Abtastrichtung auf die besagte Ausdehnung geschlossen wird.

2. Verfahren zur Messung der Ausdehnung eines Körpers (2) in einer Dimension, wobei der Körper (2) auf einen Messsensor (8) abgebildet und die Ausdehnung elektrooptisch erfasst wird, die Abbildungsrichtung der zu messenden Ausdehnung entspricht und der Körper (2) in einer zur Abbildungsrichtung geneigten Richtung mit einem optischen Muster beleuchtet und vom Messsensor in einer Abtastrichtung abgetastet wird, dadurch gekennzeichnet, dass das Muster ein Streifenmuster ist, dessen Streifen (14) senkrecht oder geneigt zur Abtastrichtung des Sensors (8) sind und dessen Streifen eine variable Breite aufweisen, die in einer Richtung stetig oder stufenweise zunimmt, und wobei aus der Breite der Streifen und bei geneigten Streifen bevorzugt auch aus der Lage der Streifen in der Abbildung auf den Messensor (8) in Abtastrichtung auf die besagte Ausdehnung geschlossen wird.

3. Verfahren gemäss Anspruch 1 oder 2, dadurch gekennzeichnet, dass aus der Abbildung des Körpers (2) auch die zwei quer zur Abbildungsrichtung liegenden Dimensionen desselben ermittelt werden.

4. Verfahren nach einem der Ansprüche 1 bis 3, dadurch gekennzeichent, dass die Abbildung des Körpers (2) periodisch linienweise abgetastet wird.

5. Verfahren nach einem der Ansprüche 1 bis 4, dadurch gekennzeichnet, dass man aus der ermittelten Breite der Streifen (14) und aus deren Lage in einem bestimmten Zeitpunkt der Abtastung auf die Dimension schliesst.

6. Verfahren nach einem der Ansprüche 1 bis 5, dadurch gekennzeichnet, dass man alle bei der linienweisen Abtastung des ganzen Körpers ermittelten Werte einer oder mehrerer Dimensionen abspeichert und daraus Grössen des Körpers, z. B. seine grössten Abmessungen, sein Volumen oder die Lage seines Schwerpunktes ermittelt.

7. Verfahren nach einem der Ansprüche 1 bis 6, dadurch gekennzeichnet, dass aus dem gegenseitigen Abstand der Streifen in der Abbildung des Körpers auf die Neigung von Flächen des Körpers geschlossen wird.

8. Anwendung des Verfahrens nach einem der Ansprüche 1 bis 7, worin mittels einer gemeinsamen Abbildung und eines gemeinsamen Messsensors Dimensionen von Körpern in drei Dimensionen erfasst und die Körper nach ihrer Grösse sortiert werden, die Körper auf einem Förderband durch eine Messzone geführt und am Ende desselben sortiert werden, dadurch gekennzeichnet, dass die Lage des Schwerpunktes der Körper ermittelt und daraus Ort und Zeitpunkt eines Sortiervorganges, z. B. des Auswerfens der Körper, bestimmt wird.

9. Anwendung nach Anspruch 8, dadurch gekennzeichnet, dass die Körper je nach Grösse durch Auswerfer verschieden weit ausgeworfen werden.

10. Vorrichtung zur Durchführung des Verfahrens nach einem der Ansprüche bis 7 mit einer Abbildungsoptik (6, 7) und einem opto-elektronischen Messsensor (8) sowie einer Beleuchtungsvorrichtung zur Beleuchtung eines Körpers (2) mit einem optischen Muster (14), wobei die Abbildungsvorrichtung (11) zur Beleuchtungsvorrichtung (16) geneigt ist, dadurch gekennzeichnet, dass die Beleuchtungsvorrichtung eine Maske (12) mit dem Muster im Beleuchtungsstrahlengang (11) hat, wobei die auf dem Körper erzeugten Streifen (14) des Musters gegen die Abtastrichtung des Messsensors (8) geneigt sind.

11. Vorrichtung zur Durchführung des Verfahrens nach einem der Ansprüche 1 bis 7 mit einer Abbildungsoptik (6, 7) und einem opto-elektronischen Messsensor (8) sowie einer Beleuchtungsvorrichtung zur Beleuchtung eines Körpers (2) mit einem optischen Muster (14), wobei die Abbildungsvorrichtung (11) zur Beleuchtungsvorrichtung (16) geneigt ist, dadurch gekennzeichnet, dass die Beleuchtungsvorrichtung eine Maske (12) mit dem Muster im Beleuchtungsstrahlengang (11) hat, wobei die auf dem Körper erzeugten Streifen (14) des Musters senkrecht auf oder geneigt gegenüber der Abtastrichtung des Messsensors (8) sind und wobei die Streifen eine variable Breite aufweisen, die in einer Richtung stetig oder stufenweise zunimmt.

12. Vorrichtung nach Anspruch 10 oder 11, dadurch gekennzeichnet, dass als Sensor (8) eine Photodiodenreihe (8) zur zeilenweise Abtastung der Abbildung des Körpers (2) vorgesehen ist.

13. Vorrichtung nach einem der Ansprüche 10 bis 12, dadurch gekennzeichnet, dass ein Förderband (1) vorgesehen ist, auf welchem Körper durch eine Messzone (3) gefördert werden.

14. Vorrichtung nach einem der Ansprüche 10 bis 13, dadurch gekennzeichnet, dass eine Sortiervorrichtung (4) vorgesehen ist, die über eine Elektronik (15) vom Sensor (8) steuerbar ist.

15. Vorrichtung nach Anspruch 14, dadurch gekennzeichnet, dass die Sortiervorrichtung (4) eine Reihe von schwenkbaren Auswerffingern (19) aufweist, welche einzeln und mit steuerbarer Intensität betätigbar sind.

## Claims

1. A method for measuring the dimension of a body (2) in one direction, the image of said body (2) being projected onto a measuring sensor (8) and said dimension being detected by electrooptical means, the direction of the projection of said image corresponding to the dimension to be measured, and said body (2) being illuminated with an optical pattern in a direction which is inclined with respect to said projecting direction and being scanned by said measuring sensor in a scanning direction, characterised in that said pattern is a stripe pattern whose stripes (14) are inclined with respect to the scanning direction of said sensor (8), the mentioned dimension being deduced from the position of said stripes on said body (2) in the projection on said measuring sensor (8) in the scanning direction.

2. A method for measuring the dimension of a body (2) in one direction, the image of said body (2) being projected onto a measuring sensor (8) and said dimension being detected by electrooptical means, the direction of the projection of said image corresponding to the dimension to be measured, and said body (2) being illuminated with an optical pattern in a direction which is inclined with respect to said projecting direction and being scanned by said measuring sensor in a scanning direction, characterised in that said pattern is a stripe pattern whose stripes (14) are perpendicular or inclined with respect to the scanning direction of said sensor (8) and whose stripes have a variable width which increases continuously or gradually in a given direction, the mentioned dimension being deduced from the width of the stripes and, in the case of inclined stripes, preferably also from the position of the stripes in the projection on said measuring sensor (8) in the scanning direction.

3. Method according to claim 1 or 2, characterised in that the two dimensions of said body (2) which are transversal to said projecting direction are deduced from said image of the same as well.

4. Method according to any one of claims 1 to 3, characterised in that said image of said body (2) is periodically scanned line by line.

5. Method according to any one of claims 1 to 4, characterised in that said dimension is deduced from the detected width of said stripes (14) and from their position at a given time of the scanning process.

6. Method according to any one of claims 1 to 5, characterised in that all values for one or a plurality of dimensions found by said line-by-line scanning of the entire body are stored and parameters of said body, e.g its largest dimensions, its volume or the position of its center of gravity, are deduced therefrom.

7. Method according to any one of claims 1 to 6, characterised in that the slant of surfaces of said body is deduced from the mutual distance of the stripes in the image of said body.

8. Application of the method according to any one of claims 1 to 7, in which the dimensions of bodies are detected in three directions by means of a common image and of a common measuring sensor and said bodies are guided through a measuring zone by a conveyor belt and sorted according to their size at its end, characterised in that the position of the center of gravity of the bodies is detected and the place and the time of a sorting process, e.g. of the ejection of the bodies, is determined accordingly.

9. Application according to claim 8, characterised in that said bodies are ejected to different distances by ejectors according to their size.

10. Device for implementing the method according to one of claims 1 to 7, comprising an optical projecting system (6,7) and an optoelectronic measuring sensor (8) as well as an illuminating device for the purpose of illuminating a body (2) with an optical pattern (14), the projecting device (11) being inclined with respect to the illuminating device (16), characterised in that said illuminating device is provided with a mask (12) having said pattern in the illuminating light path (11), the stripes (14) of the pattern which are produced on the body being inclined with respect to the scanning direction of the measuring sensor (8).

11. Device for implementing the method according to one of claims 1 to 7, comprising an optical projecting system (6,7) and an optoelectronic measuring sensor (8) as well as an illuminating device for the purpose of illuminating a body (2) with an optical pattern (14), the projecting device (11) being inclined with respect to the illuminating device (16), characterised in that said illuminating device is provided with a mask (12) having said pattern in the illuminating light path (11), the stripes (14) of the pattern which are produced on the body being perpendicular or inclined with respect to the scanning direction of the measuring sensor (8), and said stripes having a variable width which increases continuously or gradually in a given direction.

12. Device according to claim 10 or 11, characterised in that a photo diode row (8) for a line-by-line scanning of the image of said body (2) is provided as a sensor.

13. Device according to one of claims 10 to 12, characterised in that a conveyor belt (1) is provided on which bodies are conveyed through a measuring zone (3).

14. Device according to one of claims 10 to 13, characterised in that a sorting device (4) is provided which is controllable by said sensor (8) through an electronic system (15).

15. Device according to claim 14, characterised in that said sorting device (4) comprises a row of pivotable ejecting fingers (19) which are actuatable individually and with controllable intensity.

## Revendications

1. Procédé pour la mesure de la dimension d'un corps (2) dans une direction, l'image dudit corps (2) étant projetée sur un détecteur de mesure (8) et ladite dimension étant déterminée par voie électro-optique, la direction de projection correspondant à la dimension à mesurer, et le corps (2) étant éclairé avec un motif optique dans une direction inclinée par rapport à ladite direction de projection et balayé par le détecteur de mesure dans une direction de balayage, caractérisé en ce que ledit motif est un motif à bandes dont les bandes (14) sont inclinées par rapport à la direction de balayage du détecteur (8), ladite dimension étant déduite de la position des bandes sur le corps (2) dans l'image sur le détecteur de mesure (8) en direction de balayage.

2. Procédé pour la mesure de la dimension d'un corps (2) dans une direction, l'image dudit corps (2) étant projetée sur un détecteur de mesure (8) et ladite dimension étant déterminée par voie électro-optique, la direction de projection correspondant à la dimension à mesurer, et le corps (2) étant éclairé avec un motif optique dans une direction inclinée par rapport à ladite direction de projection et balayé par le détecteur de mesure dans une direction de balayage, caractérisé en ce que ledit motif est un motif à bandes dont les bandes (14) sont perpendiculaires ou inclinées par rapport à la direction de balayage du détecteur (8) et dont les bandes présentent une largeur variable qui augmente progressivement ou graduellement dans une direction donnée, ladite dimension étant déduite de la largeur des bandes et préférablement, dans le cas de bandes inclinées, également de la position des bandes dans l'image sur le détecteur de mesure (8) en direction de balayage.

3. Procédé selon la revendication 1 ou 2, caractérisé en ce que les deux dimensions transversales à la direction de projection sont également déduites de l'image du corps (2).

4. Procédé selon l'une quelconque des revendications 1 à 3, caractérisé en ce que l'image du corps (2) est périodiquement balayée ligne par ligne.

5. Procédé selon l'une quelconque des revendications 1 à 4, caractérisé en ce que ladite dimension est déduite de la largeur détectée des bandes (14) et de leur position à un certain moment du balayage.

6. Procédé selon l'une quelconque des revendications 1 à 5, caractérisé en ce que toutes les valeurs d'une ou de plusieurs dimensions déterminées lors du balayage par lignes du corps entier sont mémorisées pour en déduire des paramètres du corps tels que ses dimensions maximales, son volume ou la position de son centre de gravité.

7. Procédé selon l'une quelconque des revendications 1 à 6, caractérisé en ce que la pente de surfaces du corps est déduite de l'intervalle entre les bandes dans l'image du corps.

8. Application du procédé selon l'une quelconque des revendications 1 à 7, dans lequel les dimensions de corps sont déterminées dans trois directions à l'aide d'une image commune et d'un détecteur de mesure commun, et les corps traversent une zone de mesure sur un convoyeur à bande et sont triés à la fin de ce dernier, caractérisée en ce que la position du centre de gravité des corps est détectée, et que l'endroit et le temps d'un processus de triage tel que l'éjection des corps sont conformément déterminés.

9. Application selon la revendication 8, caractérisée en ce que les corps sont éjectés à des distances différentes selon leurs dimensions.

10. Dispositif pour la mise en oeuvre du procédé selon l'une des revendications 1 à 7, comprenant un système optique de projection (6, 7) et un détecteur de mesure (8) opto-électronique ainsi qu'un dispositif d'éclairage pour l'éclairage d'un corps (2) avec un motif optique (14), le dispositif de projection (11) étant incliné par rapport au dispositif d'éclairage (16), caractérisé en ce que le dispositif d'éclairage comporte un masque (12) avec ledit motif dans le faisceau d'éclairage (11), les bandes (14) du motif produites sur le corps étant inclinées par rapport à la direction de balayage du détecteur de mesure (8).

11. Dispositif pour la mise en oeuvre du procédé selon l'une des revendications 1 à 7, comprenant un système optique de projection (6, 7) et un détecteur de mesure (8) opto-électronique ainsi qu'un dispositif d'éclairage pour l'éclairage d'un corps (2) avec un motif optique (14), le dispositif de projection (11) étant incliné par rapport au dispositif d'éclairage (16), caractérisé en ce que le dispositif d'éclairage comporte un masque (12) avec ledit motif dans le faisceau d'éclairage (11), les bandes (14) du motif produites sur le corps étant perpendiculaires ou inclinées par rapport à la direction de balayage du détecteur de mesure (8), et les bandes présentant une largeur variable qui augmente progressivement ou graduellement dans une direction donnée.

12. Dispositif selon la revendication 10 ou 11, caractérisé en ce qu'une série de photodiodes (8) sert de détecteur (8) pour le balayage par lignes de l'image du corps (2).

13. Dispositif selon l'une des revendications 10 à 12, caractérisé en ce qu'un convoyeur à bande (1) est prévu sur lequel les corps sont transportés à travers une zone de mesure (3).

14. Dispositif selon l'une des revendications 10 à 13, caractérisé en ce qu'un dispositif de triage (4) est prévu qui est capable d'être commandé par le détecteur (8) par l'intermédiaire d'une électronique (15).

15. Dispositif selon la revendication 14, caractérisé en ce que le dispositif de triage (4) présente une série de doigts d'éjection (19) basculants capables d'être commandés individuellement et avec une intensité contrôlée.
